# EUROPÄISCHE PATENTANMELDUNG

(11) **EP 4 442 544 A1**
(43) Veröffentlichungstag der Anmeldung: **09.10.2024**
(21) Anmeldenummer: 23167044.9
(22) Anmeldetag: 06.04.2023
(51) Int. Cl.: B62D 25/00, B62D 29/00, B65G 1/14

(54) **SYSTEM MIT DÄMMELEMENTEN**

(71) Anmelder: Sika Technology AG, 6340 Baar (CH)
(72) Erfinder: LINDGREN, Henrik, 7181 Feluy (BE); WEISS, Felix, 9225 Wilen / Gottshaus (CH); KRUCKER, Roman, 8055 Zürich (CH); MUELLER, Wayan, 9000 St. Gallen (CH); LUESCHER, Helene, 8560 Märstetten (CH)
(74) Vertreter: Sika Patent Attorneys

(57) **Zusammenfassung**

Ein System umfassend: mehrere identische Dämmelemente zur Abdämmung eines Strukturelementes in einem Kraftfahrzeug, wobei jedes Dämmelement einen Träger und ein expandierbares Material, welches auf dem Träger angeordnet ist, hat, wobei benachbarte Dämmelemente über Kontaktstellen aufeinander aufliegen und im Wesentlichen parallel zueinander angeordnet sind und dadurch einen Stapel bilden und eine Stapelrichtung definieren; zumindest ein Bindungselement, welches auf ein oberstes Dämmelement des Stapels eine Kraft in eine Richtung entgegen der Stapelrichtung ausübt, und auf ein unterstes Dämmelement des Stapels eine Kraft in eine Richtung in Stapelrichtung ausübt, sodass der Stapel durch das zumindest eine Bindungselement zusammengebunden ist.

## Beschreibung

Die Erfindung betrifft ein System mit Dämmelementen zur Abdämmung von Strukturelementen in einem Kraftfahrzeug. Weiterhin betrifft die Erfindung ein Verfahren zur Anbringung solcher Dämmelemente an Strukturelemente.

Vielfach weisen Bauelemente, wie beispielsweise Karosserien und/oder Rahmen von Transport- und Fortbewegungsmitteln, insbesondere von Fahrzeugen zu Wasser oder zu Land oder von Luftfahrzeugen, Strukturen mit Hohlräumen auf, um leichtgewichtige Konstruktionen zu ermöglichen. Diese Hohlräume verursachen jedoch verschiedenste Probleme. Je nach Art des Hohlraumes muss dieser zum Verhindern des Eindringens von Feuchtigkeit und Verschmutzungen, die zur Korrosion der Bauelemente führen können, abgedichtet werden. Oft ist es auch wünschenswert, die Hohlräume und somit das Bauelement wesentlich zu verstärken, jedoch das geringe Gewicht beizubehalten. Oft ist es auch notwendig, die Hohlräume und somit die Bauelemente zu stabilisieren, um Geräusche, die sonst den Hohlraum entlang oder durch diesen hindurch übertragen werden würden, zu reduzieren. Viele dieser Hohlräume weisen eine unregelmässige Form oder ein enges Ausmass auf, wodurch es erschwert wird, sie richtig abzudichten, zu verstärken und zu dämpfen.

Insbesondere im Automobilbau, aber auch im Flugzeug- und Bootsbau, werden deshalb Abdichtungselemente (Englisch: baffle) verwendet, um Hohlräume abzudichten und/ oder akustisch abzuschotten, oder Verstärkungselemente (Englisch: reinforcer) verwendet, um Hohlräume zu verstärken.

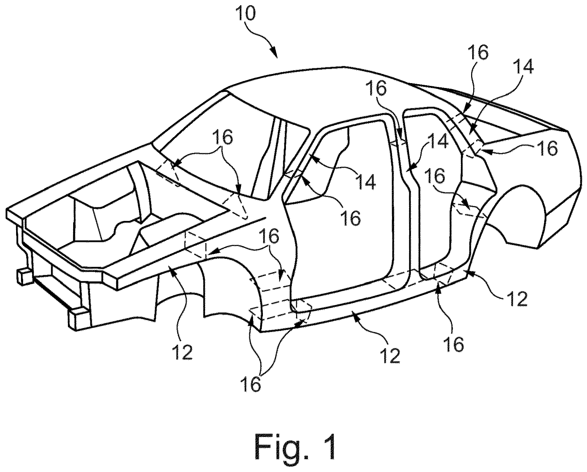

In Fig. 1 ist eine Karosserie eines Automobils schematisch dargestellt. Die Karosserie 10 weist dabei verschiedene Strukturen mit Hohlräumen, wie beispielsweise Säulen 14 und Träger bzw. Verstrebungen 12 auf. Solche Strukturelemente 12, 14 mit Hohlräumen werden üblicherweise mit Dämmelementen 16 abgedichtet bzw. verstärkt.

Aus WO2021/069120 ist bereits bekannt, solche Dämmelemente 16 zu stapeln. In den Fig. 2a und 2b ist ein Beispiel eines solchen bekannten stapelbaren Dämmelementes 16 dargestellt. Dieses Dämmelement 16 hat einen Träger 11 und ein auf diesem Träger 11 angeordnetes expandierbares Material 13. Dabei ist das Dämmelement 16 nicht vollständig flach ausgebildet, sondern es hat verschiedene Erhebungen und stufenförmige Absätze, insbesondere eine steile Stufe 5.

Das Dämmelement 16 hat eine Oberseite 17 und eine Unterseite 18. Zudem hat das Dämmelement 16 in diesem Ausführungsbeispiel zwei Fixierungselemente 3, welche jeweils als Clip ausgebildet sind, sowie zwei Distanzelemente 4, welche jeweils auf unterschiedliche Seiten ausgerichtet sind. Zudem hat das Dämmelement 16 ein Auflageelement 6, welches in diesem Ausführungsbeispiel auf der Oberseite 17 des Dämmelementes 16 angeordnet ist.

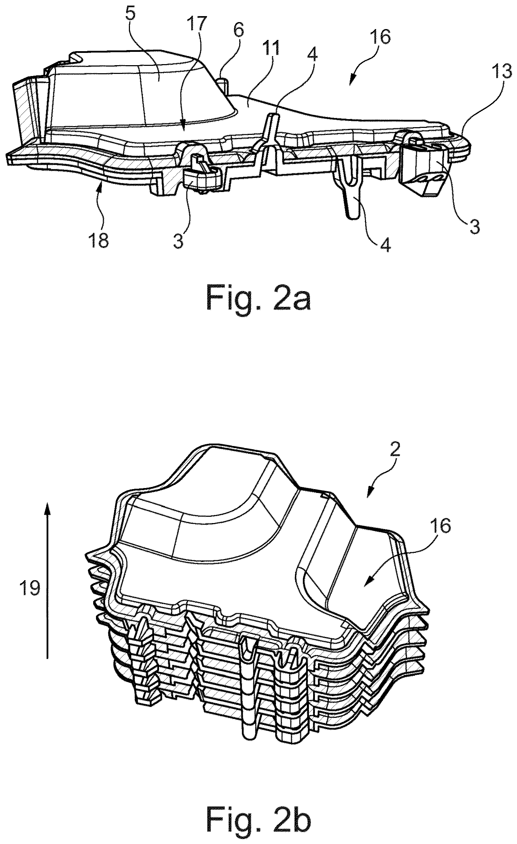

In Fig. 2b ist ein Stapel 2 mit mehreren Dämmelementen 16 gemäss Fig. 2a dargestellt. Die Dämmelemente 16 sind dabei in einer Stapelrichtung 19 aufeinandergestapelt. Dabei sind die gestapelten Dämmelemente 16 parallel zueinander angeordnet und liegen jeweils auf den Kontaktstellen auf deren Oberseite und Unterseite aufeinander auf.

Nachteilig an diesen bekannten stapelbaren Dämmelementen ist es jedoch, dass solche Stapel bei einem Transport oder einer Manipulation oftmals nicht genügend stabil sind und einzelne Dämmelemente oder mehrere Dämmelemente zusammen vom Stapel abfallen können, insbesondere bei Dämmelementen, welche durch ihre Formgebung wenig ineinander verschachtelt sind.

Es ist daher eine Aufgabe der vorliegenden Erfindung, ein verbessertes System mit Dämmelementen zur Abdämmung von Strukturelementen in einem Kraftfahrzeug zur Verfügung zu stellen, welches die Nachteile des Standes der Technik vermeidet. Das System soll insbesondere eine Transportier- und Manipulierbarkeit der Dämmelemente verbessern.

Diese Aufgabe wird zunächst gelöst durch ein System umfassend: mehrere identische Dämmelemente zur Abdämmung eines Strukturelementes in einem Kraftfahrzeug, wobei jedes Dämmelement einen Träger und ein expandierbares Material, welches auf dem Träger angeordnet ist, hat, wobei benachbarte Dämmelemente über Kontaktstellen aufeinander aufliegen und im Wesentlichen parallel zueinander angeordnet sind und dadurch einen Stapel bilden und eine Stapelrichtung definieren; zumindest ein Bindungselement, welches auf ein oberstes Dämmelement des Stapels eine Kraft in eine Richtung entgegen der Stapelrichtung ausübt, und auf ein unterstes Dämmelement des Stapels eine Kraft in eine Richtung in Stapelrichtung ausübt, sodass der Stapel durch das zumindest eine Bindungselement zusammengebunden ist.

Das hier vorgeschlagene System bietet den Vorteil, dass durch die Verwendung eines zusätzlichen Bindungselementes die Stabilität des Stapels massgeblich verbessert wird. Dadurch lassen sich derart stabilisierte Stapel beispielsweise effizienter für einen Transport in einen Behälter einpacken bzw. auspacken. Weiterhin kann dadurch einem möglichen Zerfall eines Stapels während eines Transportes wirksam vorgebeugt werden.

Ein weiterer Vorteil kann darin gesehen werden, dass die hier vorgeschlagenen Systeme als eigenständige Einheiten und ohne weitere Hilfsmittel wie Behälter oder dergleichen gehandhabt werden können, sowohl in automatisierten Systemen durch Roboter, als auch in nicht-automatisierten Systemen durch Operatoren. Beispielsweise können die zusammengebundenen Systeme direkt auf Palletten oder Formschalen oder dergleichen gelagert oder transportiert werden, sodass weniger Verpackungsmaterial benötigt wird.

Zudem hat die Verwendung solcher Bindungselemente den Vorteil, dass das Bindungselement selbst als Informationsträger dienen kann. Dadurch kann die Gefahr von Verwechslungen verringert werden kann. Es kommt beispielsweise manchmal vor, dass ähnlich geformte Dämmelemente an verschiedenen Orten einer Karosserie angebracht werden. Insbesondere gibt es auch Situationen, wo auf einer linken und einer rechten Seite der Karosserie ein gespiegeltes Dämmelement zum Einsatz kommt. In solchen und ähnlichen Situationen besteht die Gefahr, dass ein falsches Dämmelement an einem bestimmten Ort eingesetzt wird oder dass es zu einer Verwechslung von linksseitigem und rechtsseitigem Dämmelement kommt. Durch die zusätzliche Informationsmöglichkeit auf dem Bindungselement können solche Fehlmanipulationen weitgehend vermieden werden.

Die Bezeichnung "Dämmelement" umfasst im Zusammenhang mit dieser Erfindung Elemente zur Abschottung und/oder Abdämmung und/oder Verschliessung und/oder Verstärkung und/oder Dämmung eines Strukturelementes. Diese verschiedenen Eigenschaften eines solchen Dämmelementes können dabei einzeln oder aber in Kombination miteinander auftreten.

Die Bezeichnung "Oberseite" und "Unterseite" bedeutet im Zusammenhang mit dieser Erfindung jeweils die beiden Hauptoberflächen bzw. die beiden grössten Seitenflächen des Dämmelementes. Da die Dämmelemente dazu ausgelegt sind, einen Querschnitt in einem Strukturelement zu verschliessen, bedeutet dies, dass die Oberseite und die Unterseite sich jeweils im Wesentlichen in einer Ebene eines abzudämmenden Querschnitts befinden in einem Anwendungszustand. Dabei können die Oberseite bzw. die Unterseite auch einen stufenförmigen Charakter haben, das heisst, die Oberseite bzw. die Unterseite muss nicht vollständig flach ausgebildet sein.

Die Bezeichnung "parallel" in Bezug zur Anordnung von Dämmelementen in einem Stapel mehrerer identischer Dämmelemente bedeutet im Zusammenhang dieser Erfindung, dass jeweils dieselben Flächen und/oder Kanten der identischen Dämmelemente im Wesentlichen parallel zueinander angeordnet sind.

In einer beispielhaften Ausführungsform umfassen die Dämmelemente jeweils: einen Träger; und ein expandierbares Material, welches auf dem Träger angeordnet ist; wobei das Dämmelement eine Oberseite und eine Unterseite hat, welche in einem Verwendungszustand im Wesentlichen in einer Ebene eines abzudämmenden Querschnittes des Strukturelementes ausgerichtet sind.

In einer beispielhaften Ausführungsform sind mehrere Systeme mit zusammengebundenen Dämmelementen in einem Behälter angeordnet.

In einer ersten Weiterbildung umfassen die mehreren Systeme jeweils gleiche Dämmelementen. In einer alternativen zweiten Weiterbildung umfassen die mehreren Systeme jeweils unterschiedliche Dämmelemente.

In einem Ausführungsbeispiel ist der Behälter als Box oder als Kiste oder als Schachtel ausgebildet.

In einer beispielhaften Ausführungsform weist das Dämmelement auf der Oberseite und auf der Unterseite jeweils zumindest eine oder zumindest zwei oder zumindest drei Kontaktstellen auf, wobei diese Kontaktstellen derart ausgebildet sind, dass bei einer Stapelung mehrerer identischer Dämmelemente jeweils benachbarte Dämmelemente über diese Kontaktstellen aufeinander aufliegen und dadurch parallel zueinander angeordnet sind.

In einer beispielhaften Ausführungsform hat das Dämmelement auf der Oberseite und auf der Unterseite jeweils genau drei Kontaktstellen, welche bei einer Stapelung von benachbarten Dämmelementen aufeinander aufliegen.

In einer alternativen Weiterbildung hat das Dämmelement auf der Oberseite und auf der Unterseite genau vier oder zumindest vier solche Kontaktstellen.

In einer weiteren alternativen Ausführungsform hat das Dämmelement auf der Oberseite und auf der Unterseite genau fünf oder zumindest fünf solche Kontaktstellen.

In einer beispielhaften Ausführungsform sind zumindest eine Kontaktstelle auf der Oberseite und eine dieser zugeordneten Kontaktstelle auf der Unterseite derart ausgebildet, dass benachbarte Dämmelemente bei einer Stapelung in vertikaler Richtung gegen eine horizontale Verschiebung gesichert sind.

In einer beispielhaften Weiterbildung sind zumindest eine Kontaktstelle auf der Oberseite und eine dieser zugeordneten Kontaktstelle auf der Unterseite derart ausgebildet, dass bei einer Stapelung eine mechanische Arretierung zwischen den entsprechenden Kontaktstellen entsteht.

In einer beispielhaften Ausführungsform liegt zumindest eine Kontaktstelle in einem Bereich eines Fixierungselementes.

Als "Bereich eines Fixierungselementes" wird im Zusammenhang dieser Erfindung das Fixierungselement selbst, eine Basis des Fixierungselementes, und das expandierbare Material an der Basis des Fixierungselementes verstanden, welches benötigt wird, um die Öffnung im Strukturelement, in welcher das Fixierungselement eingeführt wird, abzudämmen.

In einer beispielhaften Ausführungsform ist das Fixierungselement als Clip ausgebildet.

In einer alternativen Ausführungsform ist das Fixierungselement als Lasche, Schweisslasche, Klammer, Hacken, oder Niete ausgebildet.

In einer beispielhaften Ausführungsform ist das Fixierungselement aus Kunststoff, insbesondere Polyamid, oder aus Metall ausgebildet.

In einer beispielhaften Ausführungsform ist zumindest eine Kontaktstelle als Distanzelement ausgebildet, wobei das Distanzelement in einem Verwendungszustand des Dämmelementes im Strukturelement zur Abstützung und/oder Positionierung des Dämmelementes am Strukturelement dient.

In einer beispielhaften Weiterbildung ist das Distanzelement an sich stapelbar ausgestaltet, wobei zwei ineinander gestapelte Distanzelemente eine Gesamthöhe in Stapelrichtung von höchstens 170% oder höchstens 160% oder höchstens 150% oder höchstens 140% oder höchstens 130% einer Höhe eines einzelnen Distanzelementes aufweisen.

In einer beispielhaften Ausführungsform bilden Stufen des Trägers einen Winkel zur Stapelrichtung von zumindest 35° oder zumindest 40° oder zumindest 45° oder zumindest 50° oder zumindest 55°.

Der Vorteil von derart gestalteten Stufen liegt darin, dass Dämmelemente mit flacheren Stufen besser gestapelt werden können, als dies mit steileren Stufen der Fall wäre. Bei steileren Stufen besteht insbesondere das Problem, dass benachbarte Dämmelemente nicht ohne horizontalen Versatz vertikal übereinander angeordnet werden können.

In einer beispielhaften Ausführungsform ist zumindest eine Kontaktstelle als Auflageelement ausgebildet, welches aus einer allgemeinen Oberfläche der Oberseite oder der Unterseite des Dämmelementes in Stapelrichtung herausragt.

In einer beispielhaften Ausführungsform sind alle oder einzelne Kontaktstellen durch den Träger ausgebildet.

In einer alternativen Ausführungsform sind alle oder einzelne Kontaktstellen durch das expandierbare Material ausgebildet.

In einer weiteren Ausführungsform ist zumindest eine Kontaktstelle durch den Träger gebildet, und zumindest eine Kontaktstelle ist durch das expandierbare Material gebildet.

Da der Träger in der Regel mit kleineren Toleranzen hergestellt werden kann als das expandierbare Material, kann es vorteilhaft sein, die Kontaktstellen möglichst durch den Träger auszubilden.

In einer beispielhaften Ausführungsform hat das Dämmelement zumindest ein Sicherungselement, welches derart ausgebildet ist, dass bei aufeinander gestapelten Dämmelementen ein Dämmelement durch das Sicherungselement eines benachbarten Dämmelementes gegen eine Verschiebung quer zur Stapelrichtung und/oder gegen eine Rotation des Dämmelementes um die Stapelrichtung gesichert ist.

In einer beispielhaften Ausführungsform ist das Sicherungselement derart ausgebildet, dass sich bei aufeinander gestapelten Dämmelementen die Sicherungselemente zweier benachbarter Dämmelemente in Stapelrichtung überlappen.

In einer beispielhaften Weiterbildung überlappen sich die Sicherungselemente in Stapelrichtung um zumindest 3 mm oder um zumindest 5 mm oder um zumindest 7 mm.

In einer beispielhaften Ausführungsform hat das Sicherungselement zumindest eine Führungsfläche, welche derart ausgebildet ist, dass bei einer Stapelung die Führungsfläche ein zu stapelndes Dämmelement führt, sodass das neu gestapelte Dämmelement im Wesentlichen deckungsgleich in Stapelrichtung auf dem Dämmelement angeordnet wird.

In einer beispielhaften Ausführungsform ist zumindest ein Distanzelement als Sicherungselement ausgestaltet.

In einer beispielhaften Weiterbildung ist das Distanzelement im Wesentlichen Y-förmig ausgestaltet. Beispielsweise können dabei einzelne Flächen der Schenkel des Y-förmigen Distanzelementes als Führungsfläche ausgebildet sein.

In einer alternativen Weiterbildung ist das Distanzelement im Wesentlichen U-förmig oder V-förmig. Wiederum können dabei einzelne Flächen der Schenkel des U-förmigen oder V-förmigen Distanzelementes als Führungsfläche ausgebildet sein.

In einer beispielhaften Ausführungsform ist zumindest eine Stufe als Sicherungselement ausgestaltet.

In einer beispielhaften Ausführungsform ist zumindest ein Bereich eines Fixierungselementes als Sicherungselement ausgestaltet.

In einer beispielhaften Weiterbildung ist eine Basis des Fixierungselementes als Sicherungselement ausgestaltet. Dabei kann diese Basis beispielsweise im Wesentlichen U-förmig ausgebildet sein. Wiederum können dabei einzelne Flächen der Schenkel der U-förmigen Basis des Fixierungselementes als Führungsfläche ausgebildet sein.

In einer beispielhaften Ausführungsform sind alle oder einzelne Sicherungselemente durch den Träger ausgebildet.

In einer alternativen Ausführungsform sind alle oder einzelne Sicherungselemente durch das expandierbare Material ausgebildet.

In einer weiteren Ausführungsform ist zumindest ein Sicherungselement durch den Träger gebildet, und zumindest ein Sicherungselement ist durch das expandierbare Material gebildet.

Da der Träger in der Regel mit kleineren Toleranzen hergestellt werden kann als das expandierbare Material, kann es vorteilhaft sein, die Sicherungselemente möglichst durch den Träger auszubilden.

Das Dämmelement hat eine Stapelhöhe, welche einer zusätzlichen Höhe in Stapelrichtung eines Stapels mit Dämmelementen entspricht, um welche der Stapel wächst, wenn ein weiteres Dämmelement auf den Stapel gestapelt wird.

In einer beispielhaften Ausführungsform beträgt eine Stapelhöhe des Dämmelementes höchstens 80%, bevorzugt höchstens 70%, bevorzugt höchstens 60%, bevorzugt höchstens 50%, bevorzugt höchstens 40%, bevorzugt höchstens 30%, einer Gesamthöhe eines einzelnen Dämmelementes in Stapelrichtung.

Dies hat den Vorteil, dass dadurch die Dämmelemente platzsparender in einem Stapel angeordnet werden können. Durch eine stärkere vertikale Verschachtelung benachbarter Dämmelemente in einem Stapel wird zudem eine verbesserte Stabilität eines Gesamtstapels erreicht.

Bei gestapelten Dämmelementen erhöht in einer beispielhaften Ausführungsform jeweils ein zusätzliches Dämmelement den Stapel um höchstens 20 mm, besonders bevorzugt um höchstens 18 mm, besonders bevorzugt um höchstens 16 mm, besonders bevorzugt um höchstens 14 mm, besonders bevorzugt um höchstens 12 mm, besonders bevorzugt um höchstens 10 mm.

Das enge Stapeln von Dämmelementen hat den Vorteil, dass dadurch die Dämmelemente effizienter verpackt und transportiert werden können.

In einer beispielhaften Ausführungsform umfasst ein Stapel zumindest zehn oder zumindest fünfzehn oder zumindest zwanzig oder zumindest fünfundzwanzig oder zumindest dreissig gestapelte Dämmelemente.

In einer weiteren beispielhaften Ausführungsform umfasst ein Stapel höchstens 150 oder höchstens 120 oder höchstens 100 oder höchstens 80 oder höchstens 60 gestapelte Dämmelemente.

In einer beispielhaften Ausführungsform liegt das Bindungselement am untersten und/oder am obersten Dämmelement an einem Flächenbereich einer nach aussen orientierten Oberfläche des Stapels an, welcher im Wesentlichen orthogonal zur Stapelrichtung ausgerichtet ist..

Dies hat den Vorteil, dass dadurch das Bindungselement an einer vordefinierten Stelle und bei jedem System widerholbar angeordnet werden kann, und dass ein Abrutschen oder Verrutschen des Bindungselementes auf schrägen Flächen vermieden werden kann.

In einer beispielhaften Ausführungsform liegt das Bindungselement an einer nach aussen orientierten Oberfläche des Stapels an einer Stelle an, welche eine Vertiefung bildet relativ zu benachbarten Stellen dieser Oberfläche.

Dies hat den Vorteil, dass dadurch das Bindungselement gegen ein Abrutschen oder Verrutschen gesichert werden kann.

In einer beispielhaften Ausführungsform definiert das Bindungselement eine Schnittebene durch den Stapel, welche durch Anliegestellen des Bindungselementes verläuft und welche zudem derart verläuft, dass sich die Stapelrichtung in dieser Schnittebene erstreckt, wobei Kontaktstellen zwischen benachbarten Dämmelementen derart verteilt sind, dass beidseitig dieser Schnittebene solche Kontaktstellen vorliegen.

Dies hat den Vorteil, dass dadurch eine Stabilität des Systems weiterhin verbessert werden kann. Das Vorsehen von Kontaktstellen zu beiden Seiten der Schnittebene verhindert wirksam, dass durch die zusammenbindende Kraft des Bindungselementes der Stapel aus Dämmelementen in eine Schräglage gebracht wird.

In einer beispielhaften Ausführungsform beaufschlagt das Bindungselement das oberste und das unterste Dämmelement des Stapels jeweils nur an einer Stelle und/oder entlang einer Linie mit Kraft.

In einer alternativen Ausführungsform umfasst das System zumindest zwei Bindungselemente, wobei das oberste und/oder das unterste Dämmelement des Stapels jeweils an zumindest zwei separaten Stellen mit Kraft beaufschlagt sind.

Je nach Formgebung des Dämmelementes, und je nach Stapelhöhe des Stapels bzw. Anzahl von Dämmelementen auf einem Stapel, kann eine geeignete Variante hinsichtlich der Anzahl und Auflage der Bindungselemente gewählt werden.

In einer beispielhaften Ausführungsform ist das zumindest eine Bindungselement als Band ausgebildet.

Dies hat den Vorteil, dass solche Bänder kostengünstig sind, dass dadurch wenig Abfall entsteht, dass solche Bänder universell und für verschiedenste Formen von Dämmelementen eingesetzt werden können, und dass auf solchen Bändern einfach Information zum Produkt und/oder dessen Verwendung aufgedruckt oder aufgeklebt werden kann.

In einer alternativen Ausführungsform ist das zumindest eine Bindungselement als Klammer ausgebildet.

Dies hat den Vorteil, dass solche Klammern als wiederverwendbare Elemente ausgebildet werden können, welche beim Entfernen vom Stapel nicht zerstört werden. Dadurch kann eine umweltfreundliche und ressourcenschonende Variante zur Verfügung gestellt werden.

In einer weiteren alternativen Ausführungsform ist das zumindest eine Bindungselement als Box ausgebildet. In einer beispielhaften Weiterbildung dienen Flächen an Innenwänden oder an der Deckel-Innenseite, und/oder zusätzliche Kraftbeaufschlagungselemente wie Federn und/oder Vorsprünge als kraftübertragende Elemente auf das unterste bzw. oberste Dämmelement eines Stapels.

Dies hat den Vorteil, dass dadurch eine Behälter als Bindungselement verwendet werden kann, sodass beispielsweise für einen Transport der gestapelten Dämmelemente kein zusätzlicher Behälter verwendet werden muss.

In einer beispielhaften Ausführungsform ist auf dem Bindungselement zumindest eine Information bezüglich der gebundenen Dämmelemente angebracht.

Dies hat den Vorteil, dass dadurch eine korrekte Logistik bei einem Verwendungsprozess der Dämmelemente sichergestellt werden kann. Da die Dämmelemente aufgrund des Bindungselementes nicht einzeln entfernt werden können, können dadurch unbeabsichtigte Verwechslungen vermieden werden, welche durch Entnahmen von einzelnen Dämmelementen entstehen können.

Beispielsweise kann ein Bar-Code auf das Bindungselement aufgedruckt werden, sodass ein Roboter und/oder ein Operator die Dämmelemente eines Systems korrekt identifizieren und weiterverwenden kann.

Als expandierbares Material können grundsätzlich verschiedene Materialien eingesetzt werden, welche zur Schäumung gebracht werden können. Das Material kann dabei Verstärkungseigenschaften aufweisen oder auch nicht. Typischerweise wird das expandierbare Material thermisch, durch Feuchtigkeit oder durch elektromagnetische Strahlung zur Expansion gebracht.

Ein solches expandierbares Material weist typischerweise ein chemisches oder ein physikalisches Treibmittel auf. Chemische Treibmittel sind organische oder anorganische Verbindungen, welche sich unter Einfluss von Temperatur, Feuchtigkeit, oder elektromagnetischer Strahlung zersetzen, wobei mindestens eines der Zersetzungsprodukte ein Gas ist. Als physikalische Treibmittel können beispielsweise Verbindungen eingesetzt werden, welche bei Erhöhung der Temperatur in den gasförmigen Aggregatszustand übergehen. Dadurch sind sowohl chemische als auch physikalische Treibmittel in der Lage, Schaumstrukturen in Polymeren zu erzeugen.

Bevorzugt wird das expandierbare Material thermisch geschäumt wobei chemische Treibmittel eingesetzt werden. Als chemische Treibmittel eignen sich beispielsweise Azodicarbonamide, Sulfohydrazide, Hydrogencarbonate oder Carbonate.

Geeignete Treibmittel sind beispielsweise auch kommerziell erhältlich unter dem Handelsnamen Expancel^{®} von der Firma Akzo Nobel, Niederlande, oder unter dem Handelsnamen Celogen^{®} von der Firma Chemtura Corp., USA.

Die für die Schäumung erforderliche Wärme kann durch externe oder durch interne Wärmequellen, wie einer exothermen chemischen Reaktion, eingebracht werden. Das schäumbare Material ist vorzugsweise bei einer Temperatur von ≤ 250°C, insbesondere von 100°C bis 250°C, bevorzugt von 120°C bis 240°C, bevorzugt von 130°C bis 230°C schäumbar.

Als expandierbare Materialien geeignet sind beispielsweise einkomponentige bei Raumtemperatur nicht fliessende Epoxidharzsysteme, welche insbesondere eine erhöhte Schlagzähigkeit aufweisen und Thixotropiermittel wie Aerosile oder Nanoclays enthalten. Beispielsweise weisen derartige Epoxidharzsysteme 20 bis 50 Gew.-% eines Epoxid-Füssigharzes, 0 bis 30 Gew.-% eines Epoxid-Festharzes, 5 bis 30 Gew.-% Zähigkeitsmodifikatoren, 1 bis 5 Gew.-% physikalische oder chemische Triebmittel, 10 bis 40 Gew.-% Füllstoffe, 1 bis 10 Gew.-% Thixotropiermittel und 2 bis 10 Gew.-% hitzeaktivierbare Härter auf. Als Zähigkeitsmodifikatoren eignen sich reaktive Flüssigkautschuke auf Basis von Nitrilkautschuk oder Derivate von Polyetherpolyol-Polyurethanen, Core-Shell Polymere und ähnliche dem Fachmann bekannte Systeme.

Ebenfalls geeignete expandierbare Materialien sind Treibmittel enthaltende einkomponentige Polyurethanzusammensetzungen, aufgebaut aus kristallinen, OH-Gruppen aufweisenden Polyestern im Gemisch mit weiteren Polyolen, vorzugsweise Polyetherpolyolen, und Polyisocyanaten mit blockierten Isocyanatgruppen. Der Schmelzpunkt des kristallinen Polyesters sollte ≥ 50 °C sein. Die Isocyanatgruppen des Polyisocyanats können beispielsweise mit Nucleophilen wie Caprolactam, Phenolen oder Benzoxalonen blockiert sein. Weiterhin eignen sich blockierte Polysocyanate wie sie beispielsweise in der Pulverlacktechnologie zum Einsatz kommen und beispielsweise unter den Handelsnamen Vestagon^{®} BF 1350 und Vestagon^{®} BF 1540 kommerziell erhältlich sind von Degussa GmbH, Deutschland. Als Isocyanate sind ebenfalls so genannte verkapselte oder oberflächendeaktivierte Polyisocyanate, welche dem Fachmann bekannt und beispielsweise beschrieben sind in EP 0 204 970.

Weiterhin eignen sich als expandierbare Materialien Treibmittel enthaltende zweikomponentige Epoxid/Polyurethan-Zusammensetzungen, wie sie beispielsweise beschrieben sind in WO 2005/080524 A1.

Weiterhin eignen sich als expandierbare Materialien Treibmittel enthaltende Ethylen-Vinyl-Acetat-Zusammensetzungen.

Ebenfalls geeignete expandierbare Materialien werden beispielsweise unter dem Handelsnamen SikaBaffle^{®} 240, SikaBaffle^{®} 250 oder SikaBaffle^{®} 255 von der Sika Corp., USA, vertrieben und sind in den Patenten US 5,266,133 und US 5,373,027 beschrieben. Solche expandierbaren Materialien sind für die vorliegende Erfindung besonders bevorzugt.

Als expandierbare Materialien mit Verstärkungseigenschaften sind beispielsweise diejenigen bevorzugt, welche unter dem Handelsnamen SikaReinforcer^{®} 941 von der Sika Corp., USA, vertrieben werden. Diese sind beschrieben in US 6,387,470.

In einer beispielhaften Ausführungsform hat das expandierbare Material eine Expansionsrate von 800% bis 5000%, bevorzugt von 1000% bis 4000%, besonders bevorzugt von 1500% bis 3000%. Expandierbare Materialien mit solchen Expansionsraten bieten den Vorteil, dass dadurch eine zuverlässige Abdichtung bzw. Abdämmung des Strukturelementes gegen Flüssigkeiten und Schall erreicht werden kann.

In einer beispielhaften Ausführungsform ist das expandierbare Material als temperaturinduziertes Material ausgebildet.

Dies hat den Vorteil, dass dadurch der Ofen zur Einbrennung der Tauchlackierungsflüssigkeit benutzt werden kann, um das expandierbare Material zu expandieren und um dadurch den Hohlraum abzudämmen. Somit ist kein zusätzlicher Arbeitsschritt notwendig.

Der Träger kann aus beliebigen Materialien bestehen. Bevorzugte Materialien sind Kunststoffe, insbesondere Polyurethane, Polyamide, Polyester und Polyolefine, bevorzugt hochtemperaturbeständige Polymere wie Poly(phenylenether), Polysulfone oder Polyethersulfone, welche insbesondere auch geschäumt sind; Metalle, insbesondere Aluminium und Stahl; oder gewachsene organische Materialien, insbesondere Holz- oder andere (gepresste) Faserwerkstoffe oder glasartige oder keramische Materialien; speziell auch geschäumte Materialien dieser Art; oder beliebige Kombinationen dieser Materialien. Besonders bevorzugt wird Polyamid, insbesondere Polyamid 6, Polyamid 6,6, Polyamid 11, Polyamid 12 oder ein Gemisch davon verwendet.

Weiterhin kann der Träger beispielsweise massiv, hohl, oder geschäumt sein oder eine gitterartige Struktur aufweisen. Die Oberfläche des Trägers kann typischerweise glatt, rau oder strukturiert sein.

Bei Dämmelementen, bei welchen sich das expandierbare Material auf einem Träger befindet, unterscheidet sich das Herstellungsverfahren dementsprechend, ob der Träger aus einem durch Spritzguss verarbeitbaren Material besteht oder nicht. Ist dies der Fall, wird üblicherweise ein Zweikomponenten-Spritzgussverfahren eingesetzt. Dabei wird zuerst eine erste Komponente, in diesem Fall der Träger, gespritzt. Nach Erstarren dieser ersten Komponente wird die Kavität im Werkzeug vergrössert, bzw. angepasst, oder der hergestellte Spritzling wird in ein neues Werkzeug gelegt, und eine zweite Komponente, in diesem Fall das expandierbare Material, wird mit einem zweiten Spritzaggregat an die erste Komponente angespritzt.

Besteht der Träger aus einem Material, welches sich nicht durch das Spritzgussverfahren herstellen lässt, also beispielsweise aus einem Metall, wird der Träger in ein entsprechendes Werkzeug gelegt und das expandierbare Material wird an den Träger angespritzt. Selbstverständlich besteht auch die Möglichkeit das expandierbare Material durch spezielle Befestigungsmittel oder -verfahren an dem Träger zu befestigen.

Weiterhin können Träger auch durch andere Verfahren hergestellt werden, beispielsweise durch Extrusion.

Die eingangs genannte Aufgabe wird zudem gelöst durch ein Verfahren zur Anbringung von Dämmelementen an Strukturelementen von Kraftfahrzeugen, das Verfahren umfassend die Schritte: Bereitstellen eines Systems mit gestapelten und zusammengebundenen Dämmelementen; Überführen des Systems an einen Entnahmeort; Entfernen des Bindungselementes oder der Bindungselemente; Entnehmen eines einzelnen Dämmelementes aus dem Stapel; und Anbringen des Dämmelementes am Strukturelement des Kraftfahrzeugs.

In einer beispielhaften Ausführungsform wird das Verfahren mit einem oben beschriebenen System durchgeführt.

Das Entfernen des Bindungselementes oder der Bindungselemente kann dabei vor oder nach dem Überführen bzw. dem Entnehmen stattfinden.

In einer beispielhaften Ausführungsform wird das Bereitstellen und/oder das Überführen und/oder das Entfernen und/oder das Entnehmen und/oder das Anbringen durch einen Applikationsroboter ausgeführt.

Dies hat den Vorteil, dass dadurch einzelne Schritte dieses Verfahrens, oder das ganze Verfahren, automatisiert werden kann, wodurch das gesamte Verfahren kosten- und zeiteffizienter gestaltet werden kann.

In einer beispielhaften Ausführungsform manipuliert der Applikationsroboter mehrere Systeme mit unterschiedlichen Dämmelementen.

In einer beispielhaften Ausführungsform werden die Dämmelemente beim Überführen in zumindest einem Gestell angeordnet, welches mehrere Dämmelemente aufnehmen kann, und welches die Dämmelemente in einer vordefinierte Entnahmeposition bereithalten kann.

In einer beispielhaften Weiterbildung hat das Gestell zumindest ein Führungselement, welches einem Umriss eines Dämmelementes zumindest teilweise nachgeformt ist.

In einer beispielhaften Weiterbildung sind das zumindest eine Führungselement oder die mehreren Führungselemente so ausgebildet, dass die Dämmelemente in nur einer räumlichen Lage darin aufnehmbar sind.

In einer beispielhaften Ausführungsform sind für jeden unterschiedlichen Typ von Dämmelementen, welche für das Verfahren vorgesehen sind, ein jeweils eigenes Gestell vorgesehen. Insbesondere hat dabei jedes Gestell derart ausgestaltete Führungselement, dass nur der vorgesehene Dämmelement-Typus darin angeordnet werden kann.

Das Vorsehen von separaten und typenspezifischen Gestellen hat den Vorteil, dass dadurch Fehlmanipulationen vermieden werden können. Zudem kann dadurch eine Platzeinsparung erreicht werden, da solche Gestelle weniger Platz beanspruchen als beispielsweise offene Behälter.

In einer beispielhaften Ausführungsform umfasst der Roboter einen mehrgelenkigen Roboterarm und einen daran angeordneten Greifer.

In einer beispielhaften Ausführungsform liegt das Strukturelement als einzelnes Blech, oder als mehrere miteinander verbundene Bleche, insbesondere Säulen oder Träger oder Verstrebungen, oder als Bestandteil einer Karosserie, oder als Karosserie vor.

In einer beispielhaften Ausführungsform hat das Strukturelement zumindest eine Öffnung, und hat das Dämmelement zumindest ein Fixierungselement, wobei diese beiden Elemente derart ausgebildet sind, dass das Fixierungselement in die Öffnung eingerastet werden kann.

In einer beispielhaften Ausführungsform wird beim Anbringen ein Fixierungselement des Dämmelementes in eine Öffnung des Strukturelementes eingerastet.

In einer beispielhaften Ausführungsform ist ein oben beschriebenes System derart ausgebildet, dass ein oben beschriebenes Verfahren damit ausgeführt werden kann.

Einzelheiten und Vorteile der Erfindung werden im Folgenden anhand von Ausführungsbeispielen und mit Bezug auf schematische Zeichnungen beschrieben. Es zeigen:
- Fig. 1: eine beispielhafte Darstellung einer Karosserie;
- Fig. 2a und 2b: eine schematische Darstellung eines beispielhaften Dämmelementes beziehungsweise eines Stapels mit mehreren solchen Dämmelementen;
- Fig. 3a bis 3i: eine schematische Darstellung eines beispielhaften Systems zusammengebundener Dämmelemente;
- Fig. 4a bis 4f: eine schematische Darstellung eines beispielhaften Stapels aus Dämmelementen mit beispielhaften Einwirkungsstellen von Kräften eines Bindungselementes;
- Fig. 5a bis 5c: eine schematische Darstellung eines beispielhaften Verfahrens zur Anbringung von Dämmelementen an Strukturelementen in Kraftfahrzeugen; und
- Fig. 6a und 6b: eine schematische Darstellung eines beispielhaften Verfahrens zur Anbringung von Dämmelementen an Strukturelementen in Kraftfahrzeugen.

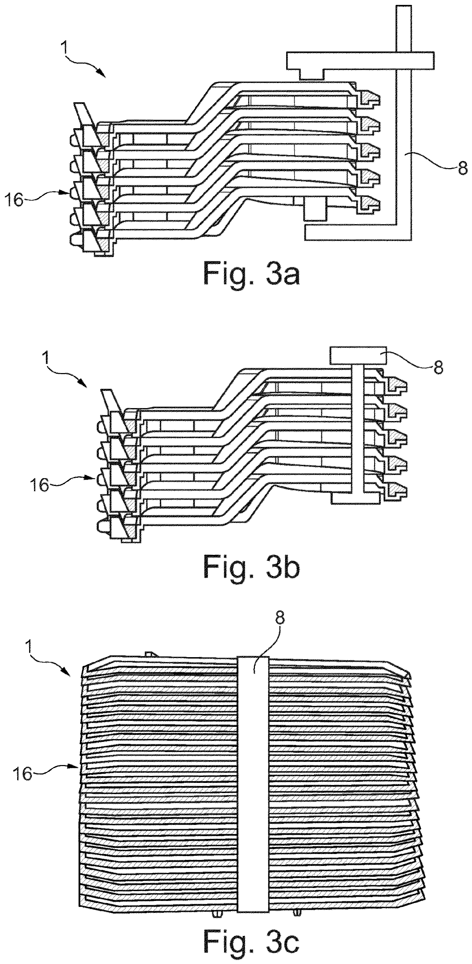

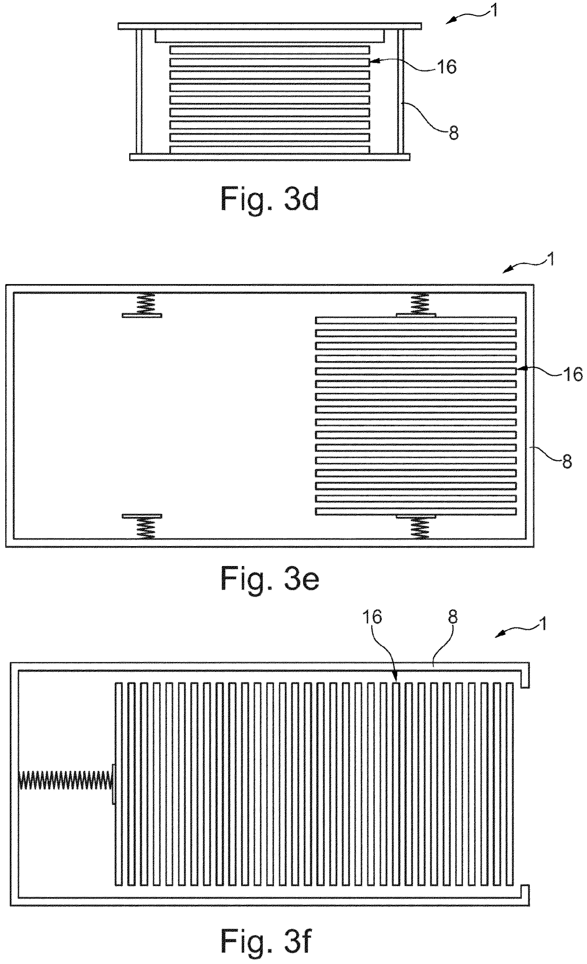

In den Fig. 3a bis 3i sind verschiedene beispielhafte Systeme 1 zusammengebundener Dämmelemente 16 dargestellt.

In Fig. 3a ist eine erste beispielhafte Ausführungsform eines Bindungselementes 8 gezeigt. Hier ist das Bindungselement 8 als Klammer ausgebildet, welche den Stapel der Dämmelemente 16 einklemmt, indem auf das oberste und das unterste Dämmelement 16 des Stapels eine Kraft ausgeübt wird.

In Fig. 3b ist eine zweite beispielhafte Ausführungsform eines Bindungselementes 8 gezeigt. Hier ist das Bindungselement 8 als Gewindestange mit Muttern ausgebildet, welche den Stapel der Dämmelemente 16 einklemmt, indem durch die aufgeschraubten Muttern auf das oberste und das unterste Dämmelement 16 des Stapels eine Kraft ausgeübt wird.

In Fig. 3c ist eine dritte beispielhafte Ausführungsform eines Bindungselementes 8 gezeigt. Hier ist das Bindungselement 8 als Band ausgebildet, welches den Stapel der Dämmelemente 16 einklemmt, indem auf das oberste und das unterste Dämmelement 16 des Stapels ein Kraft ausgeübt wird. In dieser Ausführungsvariante werden die Dämmelemente 16 durch das Band zusätzlich gegen seitliches Verrutschen gesichert.

In den Fig. 3d bis 3f sind verschiedene Varianten einer vierten beispielhaften Ausführungsform eines Bindungselementes 8 gezeigt. Hier ist das Bindungselement 8 als Box ausgebildet, welche den Stapel der Dämmelemente 16 einklemmt, indem auf das oberste und das unterste Dämmelement 16 des Stapels eine Kraft ausgeübt wird. Dabei können Innenflächen der Box direkt eine Kraft auf die Dämmelemente ausüben, oder aber es können zusätzliche Elemente wie Federn oder Vorsprünge vorgesehen sein, welche gezielt eine Kraft auf das oberste und das unterste Dämmelement 16 des Stapels eine Kraft ausüben.

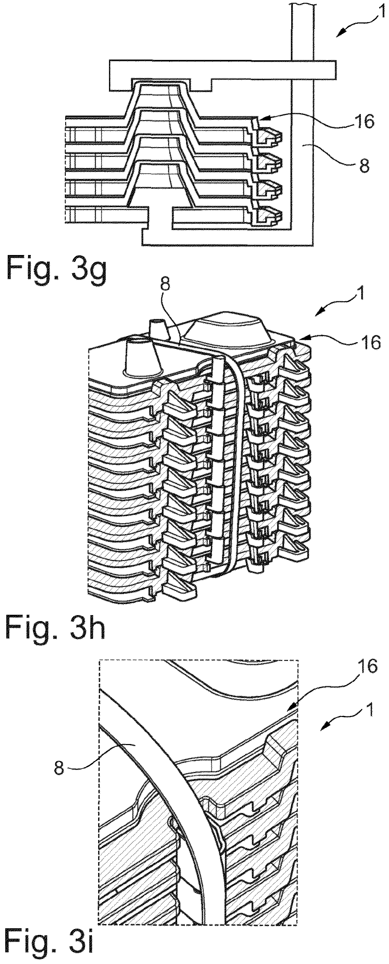

In Fig. 3g ist eine weitere beispielhafte Ausführungsform eines Bindungselementes 8 gezeigt. Hier ist das Bindungselement 8 als Klammer ausgebildet, welches den Stapel der Dämmelemente 16 einklemmt, indem auf das oberste und das unterste Dämmelement 16 des Stapels eine Kraft ausgeübt wird. In dieser Ausführungsvariante hat die Klammer spezifisch ausgeformte Kontaktstellen, welche jeweils in komplementär ausgeformte Stellen des untersten bzw. des obersten Dämmelementes 16 eingreifen. Dadurch kann ein ungewolltes Abrutschen oder Verrutschen der Klammer verhindert werden.

In Fig. 3h ist eine weitere beispielhafte Ausführungsform eines Bindungselementes 8 gezeigt. Hier ist das Bindungselement 8 als Band ausgebildet, welches den Stapel der Dämmelemente 16 einklemmt, indem auf das oberste und das unterste Dämmelement 16 des Stapels eine Kraft ausgeübt wird. In dieser Ausführungsvariante liegt das Band auf dem obersten Dämmelement 16 in einer Vertiefung relativ zu benachbarten Bereichen der Oberfläche. Dadurch wird ein ungewolltes Abrutschen oder Abfallen des Bandes verhindert.

In Fig. 3i ist eine weitere beispielhafte Ausführungsform eines Bindungselementes 8 gezeigt. Hier ist das Bindungselement 8 wiederum als Band ausgebildet. In dieser Ausführungsvariante liegt das Band in einer Vertiefung der seitlichen Bereiche der Dämmelemente 16. Dadurch ist das Band in einem seitlichen Bereich des Stapels geführt und gegen ein ungewolltes Verrutschen oder Abrutschen gesichert.

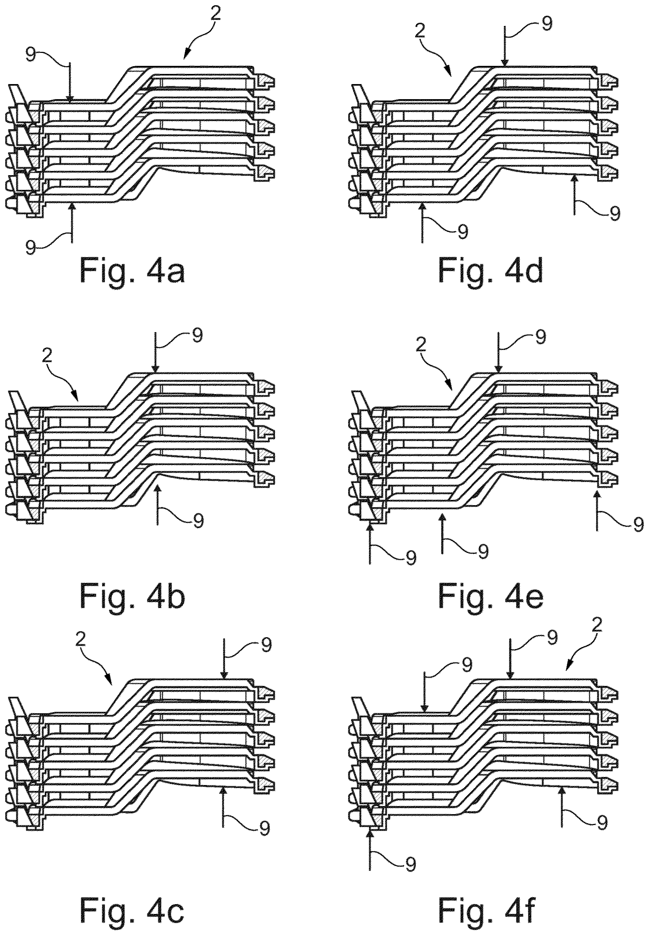

In den Fig. 4a bis 4f sind schematisch und beispielhaft Stapel 2 aus Dämmelementen 16 mit beispielhaften Einwirkungsstellen von Kräften 9 eines Bindungselementes dargestellt.

In den Fig. 4a bis 4c wirkt eine Kraft 9 des Bindungselementes (nicht dargestellt in diesen Figuren) jeweils nur an einer Stelle auf das unterste respektive das oberste Dämmelement 16 ein.

In den Fig. 4d bis 4f wirken jeweils zumindest auf eines der Dämmelemente 16 mehr als eine Kraft 9 auf mehr als eine Stelle auf das Dämmelement 16 ein. Dies kann beispielsweise durch mehrere Bindungselemente ausgeführt werden, oder durch ein Bindungselement mit mehreren Auflagestellen.

In allen Ausführungsbeispielen gemäss den Figuren 4a bis 4f definiert das Bindungselement (nicht dargestellt) eine Schnittebene durch den Stapel 2, welche durch Anliegestellen des Bindungselementes verläuft und welche zudem derart verläuft, dass sich die Stapelrichtung in dieser Schnittebene erstreckt, wobei Kontaktstellen zwischen benachbarten Dämmelementen 16 derart verteilt sind, dass beidseitig dieser Schnittebene solche Kontaktstellen vorliegen.

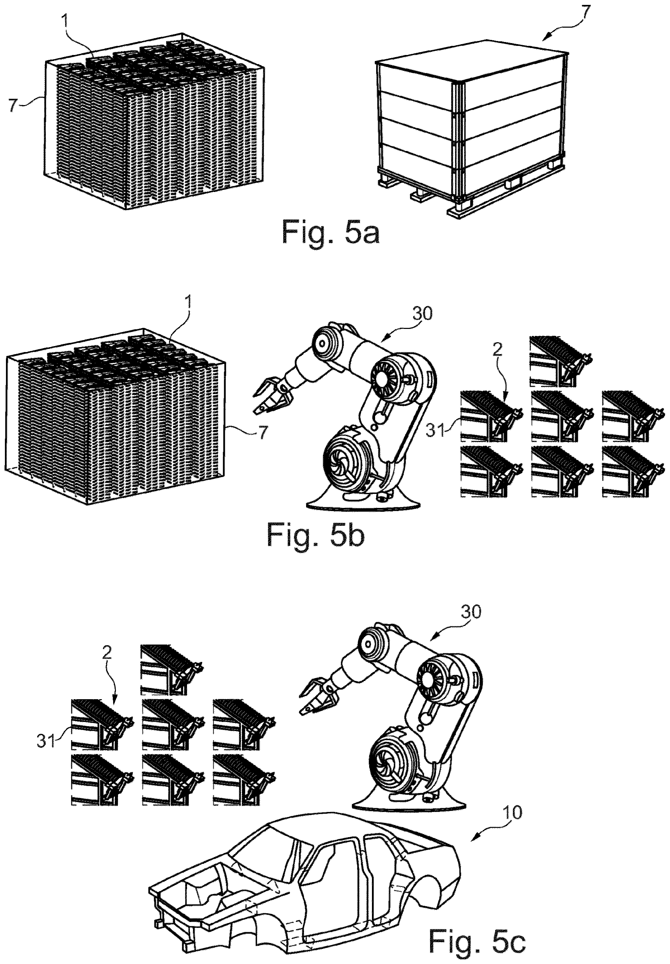

In den Fig. 5a bis 5c ist schematisch und beispielhaft ein erstes Verfahren zur Anbringung von Dämmelementen 16 an Strukturelementen 12, 14 in Kraftfahrzeugen dargestellt.

In Fig. 5a ist die Bereitstellung von Systemen 1 mit gestapelten und zusammengebundenen Dämmelementen 16 dargestellt. In diesem Beispiel sind die Systeme 1 in einem Behälter 7 angeordnet.

In Fig. 5b ist das Überführen der Systeme 1 an einen Entnahmeort, sowie das Entfernen der Bindungselemente dargestellt. In diesem Beispiel werden die Systeme 1 durch einen Applikationsroboter 30 überführt, und derselbe Applikationsroboter 30 entfernt auch die Bindungselemente. Am Entnahmeort hat es mehrere Gestelle 31, welche die Stapel 2 der Dämmelemente 16 aufnehmen.

In Fig. 5c ist schliesslich das Entnehmen einzelner Dämmelementes 16 aus dem Stapel 2 sowie das Anbringen der Dämmelemente 16 am Strukturelement 12, 14 bzw. der Karosserie 10 des Kraftfahrzeugs. Wiederum werden sowohl das Entnehmen als auch das Anbringen durch einen Applikationsroboter 30 durchgeführt.

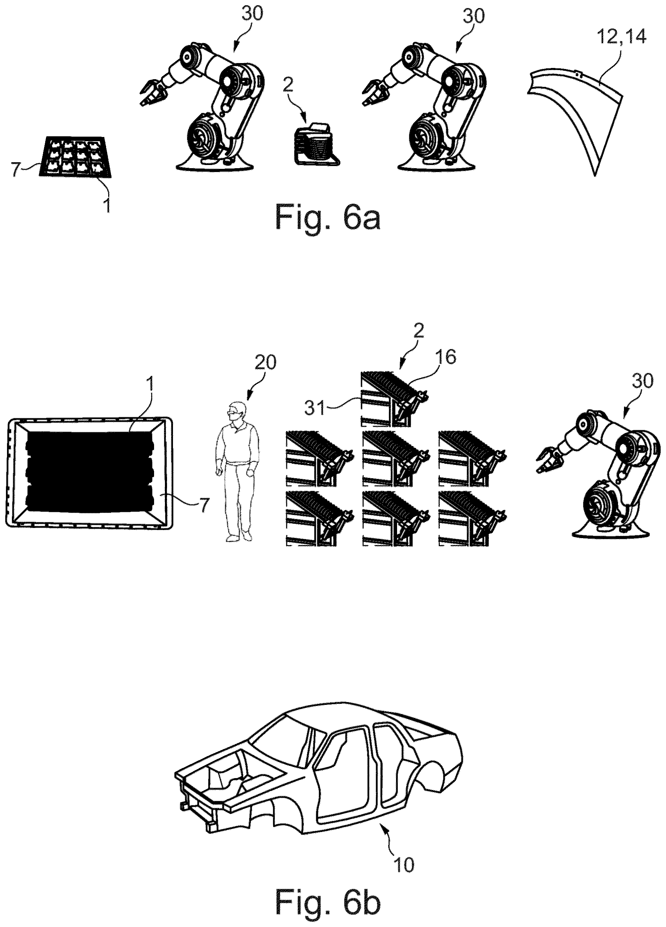

In Fig. 6a ist schematisch und beispielhaft ein zweites Verfahren zur Anbringung von Dämmelementen 16 an Strukturelementen 12, 14 in Kraftfahrzeugen dargestellt. Wiederum werden die Systeme 1 in einem Behälter 7 bereitgestellt, und durch einen Applikationsroboter 30 überführt. Am Entnahmeort werden vom Stapel 2 einzelne Dämmelemente 16 durch einen zweiten Applikationsroboter 30 entnommen und an ein Strukturelement 12, 14 angebracht. Im Unterschied zum Beispiel in den Figuren 5a bis 5c werden in diesem Beispiel keine Gestelle eingesetzt.

In Fig. 6b ist schematisch und beispielhaft ein drittes Verfahren zur Anbringung von Dämmelementen 16 an Strukturelementen 12, 14 in Kraftfahrzeugen dargestellt. Hier werden wiederum Gestelle 31 am Entnahmeort verwendet, und im Unterschied zu den vorherigen Beispielen werden hier die Systeme 1 von einem Operator 20 an den Entnahmeort überführt, und auch das Entfernen der Bindungselemente wird durch den Operator 20 durchgeführt.

### Bezugszeichenliste

- 1: System
- 2: Stapel
- 3: Fixierungselement
- 4: Distanzelement
- 5: Stufe
- 6: Auflageelement
- 7: Behälter
- 8: Bindungselement
- 9: Kraft
- 10: Karosserie
- 11: Träger
- 12: Strukturelement
- 13: expandierbares Material
- 14: Strukturelement
- 15: Stapelhöhe eines Dämmelementes
- 16: Dämmelement
- 17: Oberseite
- 18: Unterseite
- 19: Stapelrichtung
- 20: Operator
- 30: Applikationsroboter
- 31: Gestell

## Patentansprüche

1. System (1) umfassend:
mehrere identische Dämmelemente (16) zur Abdämmung eines Strukturelementes (12, 14) in einem Kraftfahrzeug, wobei jedes Dämmelement (16) einen Träger (11) und ein expandierbares Material (13), welches auf dem Träger (11) angeordnet ist, hat, wobei benachbarte Dämmelemente (16) über Kontaktstellen aufeinander aufliegen und im Wesentlichen parallel zueinander angeordnet sind und dadurch einen Stapel (2) bilden und eine Stapelrichtung (19) definieren;
zumindest ein Bindungselement (8), welches auf ein oberstes Dämmelement (16) des Stapels (2) eine Kraft (9) in eine Richtung entgegen der Stapelrichtung (19) ausübt, und auf ein unterstes Dämmelement (16) des Stapels (2) eine Kraft (9) in eine Richtung in Stapelrichtung (19) ausübt, sodass der Stapel (2) durch das zumindest eine Bindungselement (8) zusammengebunden ist.

2. System (1) nach Anspruch 1, wobei jedes Dämmelement (16) zumindest ein Sicherungselement hat, welches derart ausgebildet ist, dass bei aufeinander gestapelten Dämmelementen (16) ein Dämmelement (16) durch das Sicherungselement eines benachbarten Dämmelementes (16) gegen eine Verschiebung quer zur Stapelrichtung (19) und/oder gegen eine Rotation des Dämmelementes (16) um die Stapelrichtung (19) gesichert ist.

3. System (1) nach Anspruch 2, wobei zumindest ein Distanzelement (4) und/oder zumindest eine Stufe (5) und/oder zumindest ein Bereich eines Fixierungselementes (3) als Sicherungselement ausgestaltet ist.

4. System (1) nach einem der vorhergehenden Ansprüche, wobei zumindest eine Kontaktstelle in einem Bereich eines Fixierungselementes (3) liegt, und/oder wobei der Bereich des Fixierungselements (3) als Sicherungselement ausgebildet ist.

5. System (1) nach einem der vorhergehenden Ansprüche, wobei das Bindungselement (8) am untersten und/oder am obersten Dämmelement (16) an einem Flächenbereich einer nach aussen orientierten Oberfläche des Stapels (2) anliegt, welcher im Wesentlichen orthogonal zur Stapelrichtung ausgerichtet ist.

6. System (1) nach einem der vorhergehenden Ansprüche, wobei das Bindungselement (8) an einer nach aussen orientierten Oberfläche des Stapels (2) an einer Stelle anliegt, welche eine Vertiefung bildet relativ zu benachbarten Stellen dieser Oberfläche.

7. System (1) nach einem der vorhergehenden Ansprüche, wobei das Bindungselement (8) eine Schnittebene durch den Stapel (2) definiert, welche durch Anliegestellen des Bindungselementes (8) verläuft und welche zudem derart verläuft, dass sich die Stapelrichtung (19) in dieser Schnittebene erstreckt, wobei Kontaktstellen zwischen benachbarten Dämmelementen (16) derart verteilt sind, dass beidseitig dieser Schnittebene solche Kontaktstellen vorliegen.

8. System (1) nach einem der vorhergehenden Ansprüche, wobei das Bindungselement (8) das oberste und das unterste Dämmelement (16) des Stapels (2) jeweils nur an einer Stelle und/oder entlang einer Linie mit Kraft (9) beaufschlagt.

9. System (1) nach einem der Ansprüche 1 bis 7, wobei das System (1) zumindest zwei Bindungselemente (8) umfasst, wobei das oberste und/oder das unterste Dämmelement (16) des Stapels (2) jeweils an zumindest zwei separaten Stellen mit Kraft (9) beaufschlagt sind.

10. System (1) nach einem der vorhergehenden Ansprüche, wobei das zumindest eine Bindungselement (8) als Band oder als Klammer oder als Box ausgebildet ist.

11. System (1) nach einem der vorhergehenden Ansprüche, wobei auf dem Bindungselement (8) zumindest eine Information bezüglich der gebundenen Dämmelemente (16) angebracht ist.

12. System (1) nach einem der vorhergehenden Ansprüche, wobei jeweils ein zusätzliches Dämmelement (16) den Stapel in Stapelrichtung (19) um höchstens 20 mm erhöht, und/oder wobei eine Stapelhöhe eines einzelnen Dämmelementes (16) höchstens 50% einer Gesamthöhe eines einzelnen Dämmelementes (16) in Stapelrichtung (19) beträgt.

13. Verfahren zur Anbringung von Dämmelementen (16) an Strukturelementen (12, 14) in Kraftfahrzeugen, das Verfahren umfassend die Schritte:
Bereitstellen eines Systems (1) mit gestapelten und zusammengebundenen Dämmelementen (16) nach einem der Ansprüche 1 bis 12;
Überführen des Systems (1) an einen Entnahmeort;
Entfernen des Bindungselementes (8) oder der Bindungselemente (8);
Entnehmen eines einzelnen Dämmelementes (16) aus dem Stapel (2); und
Anbringen des Dämmelementes (16) am Strukturelement (12, 14) des Kraftfahrzeugs.

14. Verfahren nach Anspruch 13, wobei das Bereitstellen und/oder das Überführen und/oder das Entfernen und/oder das Entnehmen und/oder das Anbringen durch einen Applikationsroboter (30) ausgeführt wird.

15. Verfahren nach Anspruch 14, wobei der Applikationsroboter (30) mehrere Systeme (1) mit unterschiedlichen Dämmelementen (16) manipuliert.
